# NEUE EUROPÄISCHE PATENTSCHRIFT

(11) **EP 0 769 524 B2**
(45) Veröffentlichungstag und Bekanntmachung des Hinweises auf die Entscheidung über den Einspruch: **14.12.2005**
(45) Hinweis auf die Patenterteilung: 23.05.2001
(21) Anmeldenummer: 96115411.9
(22) Anmeldetag: 26.09.1996
(51) Int. Cl.: C08L 25/06, C08L 33/06

(54) **Verwendung von Formteilen aus thermoplastischen Formmassen**
Use of moulded parts from thermoplastic moulding compounds
Utilisation des pièces moulées à base de compositions de moulage thermoplastiques

(30) Priorität: 04.10.1995 DE 19536892
(43) Veröffentlichungstag der Anmeldung: 23.04.1997
(73) Patentinhaber: BASF Aktiengesellschaft, 67056 Ludwigshafen (DE)
(72) Erfinder: Rosenau, Bernhard, Dr., 67434 Neustadt (DE); McKee, Graham Edmund, Dr., 67433 Neustadt (DE); Schweiger, Christian, 68259 Mannheim (DE)

(56) Entgegenhaltungen:
- EP-A- 0 326 024
- EP-A- 0 450 485
- EP-A- 0 528 196
- EP-A- 0 576 960
- EP-A- 0 582 951
- EP-A- 0 601 473
- EP-A- 0 603 674
- EP-A- 0 716 101
- DE-A- 2 901 576
- DE-A- 3 149 358
- DE-A- 4 404 750

## Beschreibung

Die vorliegende Erfindung betrifft die Verwendung von Formteilen, mit matter Oberfläche für den Außenbereich von Kraftfahrzeugen, dadurch gekennzeichnet, daß die Formteile ausgewählt sind aus Außenspiegeln, Leuchteneinfassungen, Kühlergrills, Radkappen, Stoßfängern, Heckblenden, Schützleisten, Spoilern und Türgriffen, und daß die Formteile hergestellt werden aus thermoplastischen Formmassen, welche enthalten
A) 30 bis 99,8 Gew.-% eines thermoplastischen Polymerisates aus
   a1) 50 bis 95 Gew.-% einer Styrolverbindung der allgemeinen Formel 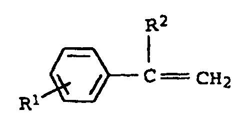 in der R¹ und R² für Wasserstoff oder C₁-C₈-Alkyl stehen, und/oder eines (C₁-C₈-Alkyl)esters der Acrylsäure oder Methacrylsäure,
   a2) 5 bis 40 Gew.-% Acrylnitril und/oder Methacrylnitril, und
   a3) 0 bis 40 Gew.-% von einem oder mehreren weiteren monoethylenisch ungesättigten Monomeren,
B) 0,1 bis 70 Gew.-% eines Pfropfpolymerisates mit einem mittleren Teilchendurchmesser d₅₀ kleiner 700 nm aus
   b1) 30 bis 90 Gew.-% eines kautschukelastischen Pfropfkerns aus einem Polymeren mit einer Glasübergangstemperatur unter 0°C, erhältlich durch Copolymerisation von
      b11) 50 bis 99,99 Gew.-% eines (C₁-C₁₀-Alkyl)esters der Acrylsäure,
      b12) 0,01 bis 5 Gew.-% eines polyfunktionellen, vernetzenden Monomeren, und
      b13) 0 bis 40 Gew.-% von einem oder mehreren weiteren monoethylenisch ungesättigten Monomeren, und
   b2) 10 bis 70 Gew.-% einer Pfropfschale aus
      b21) 50 bis 100 Gew.-% einer Styrolverbindung der allgemeinen Formel 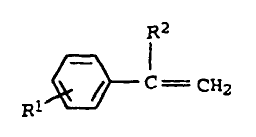 in der R¹ und R² für Wasserstoff oder C₁-C₈-Alkyl stehen, und/oder eines (C₁-C₈-Alkyl) esters der Acrylsäure oder Methacrylsäure,
      b22) 0 bis 40 Gew.-% Acrylnitril und/oder Methacrylnitril, und
      b23) 0 bis 40 Gew.-% von einem oder mehreren weiteren monoethylenisch ungesättigten Monomeren,
C) 0,1 bis 70 Gew.-% eines partikelförmigen Polymerisates als Mattierungsmittel, wobei das partikelförmige Polymerisat C) im wesentlichen aus
   c1) einem kautschukelastischen Pfropfpolymerisat mit einem mittleren Teilchendurchmesser d₅₀ von 700 nm oder darüber, das im wesentlichen einen Pfropfkern auf Basis von Butadien und eine Pfropfhülle aus Basis von Styrol und Acrylnitril enthält und nach dem Verfahren der Lösungspolymerisation hergestellt wird, oder
   c2) einem Polymeren, das mit Mischungen, welche die oben definierten Komponenten A) und B) enthalten, unverträglich ist, oder
   c3) einem Pfropfpolymerisat, wie es unter B) definiert wurde, wobei jedoch der mittlere Teilchendurchmesser d₅₀ 700 nm oder mehr beträgt,
aufgebaut ist.

Vorteilhafte Ausführungsformen sind in den abhängigen Ausprüchen beschrieben.

Der Begriff "Formteile" im Sinne dieser Erfindung schließt auch Halbzeuge und Folien ein.

Formteile aus Kunststoffen haben vielfältige Einsatzgebiete, da sich aus Kunststoffen in technisch ausgereiften Verfahren wie dem Spritzgußverfahren auch komplexe Geometrien verwirklichen lassen. Durch die Möglichkeit des Anformens von Ösen, Schnapphaken, Filmscharnieren oder anderer Details sind montagefreundliche Formteile in einem Arbeitsschritt erhältlich, weshalb solche Formteile, insbesondere solche aus schlagzäh modifizierten Formmassen, im Konstruktionsbereich, beispielsweise im Automobilbau, in zunehmendem Maße als kostengünstige und gewichteinsparende Alternative zu Metallteilen eingesetzt werden. Die Veröffentlichung "Kunststoffe im Automobilbau" von A. Weber, Automobiltechnische Zeitschrift 93 (1991) 3, S. 138 bis 146, nennt als weitere Vorteile von Kfz-Kunststoffen, insbesondere die in weiten Grenzen variierbaren Parameter, Festigkeit, Steifigkeit und Zähigkeit sowie die Witterungsbeständigkeit.

Speziell beim Einsatz von Kunststoffen im Außenbereich muß eine ausreichende Beständigkeit gegen Witterungseinflüsse, insbesondere UV-Strahlung, Frost-Temperaturen, Temperaturwechsel und Wasser, gewährleistet sein. Mit Polymerisaten aus konjugierten Dienen, beispielsweise Polybutadien-Kautschuk, schlagzäh modifizierte Formmassen sind daher trotz ihrer guten Kälteschlagzähigkeit für Außenanwendungen weniger geeignet, da die in den Kautschukmolekülen verbliebenen C=C-Doppelbindungen von UV-Strahlung angegriffen werden, woraus eine Verwitterung der Oberfläche, sichtbar als Vergrauung oder Vergilbung, und eine Alterung, kenntlich an einer Verschlechterung der mechanischen Eigenschaften, resultiert.

Diese Erscheinungen können durch die Mitverwendung von UV-Stabilisatoren in den Formmassen abgeschwächt, jedoch nicht völlig unterbunden werden.

Eine bessere Witterungsbeständigkeit schlagzäher Formteile wird erreicht, wenn deren Formmassen Kautschuk-Polymere ohne C=C-Doppelbindungen in den Molekülen enthalten. Häufig bestehen solche Formteile aus sog. ASA-Formmassen (Acrylnitril/Styrol/Acrylester), enthalten demnach Poly(acrylsäurealkylester) als Kautschuk.

In bestimmten Anwendungsbereichen witterungsbeständiger, schlagzäher Polymermaterialien wie ASA, insbesondere auch im Automobilbau, wird in zunehmendem Maße eine blendfreie, matte Oberfläche gewünscht, wofür dekorative Gründe oder auch Sicherheitsaspekte, z.B. verminderte Blendung des Autofahrens durch Reflexion, und verbesserte Gebrauchseigenschaften - Fingerabdrücke sind auf matten Flächen kaum sichtbar - zu nennen sind.

Matte Formteile lassen sich durch Behandlung der Oberfläche des fertigen, normalen Glanz aufweisenden Formteils erzielen, beispielsweise durch mechanisches Aufrauhen wie Schleifen und Bürsten, durch Ätzen, Anlösen und Quellen oder durch Aufbringen einer matten Überzugsschicht (Lackieren). Allen Verfahren gemeinsam ist jedoch der Nachteil eines zusätzlichen Arbeitsschrittes am fertigen Formteil.

Ferner kann man zur Herstellung von Formteilen mit matter Oberfläche auch Preß- und Formwerkzeuge mit strukturierter Oberfläche verwenden, jedoch wird die Struktur des Werkzeugs verhältnismäßig schnell abgenutzt.

Der Zusatz anorganischer Mattierungsmittel wie Kieselgel oder Kreide zu Polymeren hat den Nachteil, daß die mechanischen Eigenschaften der Formkörper beeinträchtigt werden und die Extrusions-, Preß- und Formwerkzeuge aufgrund der hohen Abrasivität und Härte der anorganischen Mattierungsmittel erheblich schneller verschließen. Insbesondere dann, wenn zur Erzielung einer besonders starken Mattierung strukturierte Werkzeugoberflächen und solche Mittel zugleich verwendet werden, nutzen die Werkzeugoberflächen schnell ab, weshalb die Formteiloberfläche glänzende Stellen aufweist.

Dieser negative Effekt läßt sich durch den Zusatz geeigneter organischer Mattierungsmittel vermeiden. Sie bestehen aus Partikeln vergleichsweise großen Durchmessers (D > etwa 0,7 µm) die im Matrixpolymeren dispergiert sind. Die Partikel treten etwas aus der glatten und damit glänzenden Oberfläche des Matrix-polymers heraus - es entsteht eine mikroskopisch rauhe Oberfläche - und bewirken auf diese Weise eine diffuse Reflexion des auftreffenden Lichtes (Streuung), wodurch die Oberfläche dem Betrachter matt erscheint.

Gemäß der EP-A 576 960 besteht ein anderer Weg zur Erzielung matter, schlagzäher Formmassen darin, größere Teilchen durch Agglomeration von kleinen Teilchen solcher Pfropfpolymere zu erzeugen, die im Pfropfkern saure und in der Pfropfhülle basische Gruppen enthalten. Solche Teilchen sind in der EP-A 450 511 beschrieben. Dem durch diese Teilchen zu erzielenden Mattierungseffekt sind in manchen Fällen jedoch Grenzen gesetzt.

Der Erfindung lag daher die Verwendung von Formteilen mit matter Oberfläche für den Außenbereich von Kraftfahrzeugen als Aufgabe zugrunde, wobei die Formteile witterungsbeständig sind und eine matte Oberfläche aufweisen, sowie außerdem eine hohe Schlagzähigkeit haben.

Demgemäß wurden die eingangs definierten Formteile gefunden. Weiterhin wurden solche Formteile gefunden, welche bestimmte partikelförmige Polymerisate C) enthalten.

Die Komponente A) der Formmassen, aus denen die erfindungsgemäßen Formteile bestehen, ist mit einem Anteil von 30 bis 99,8 bevorzugt 35 bis 95 und besonders bevorzugt 40 bis 90 Gew.-%, bezogen auf die Summe der Komponenten A), B) und C), in den Massen enthalten.

Die Komponente A) wird erhalten durch Polymerisation eines Monomerengemisches aus, bezogen auf A),
a1) 50 bis 95, bevorzugt 60 bis 95 und besonders bevorzugt 60 bis 90 Gew.-% einer Styrolverbindung der allgemeinen Formel I 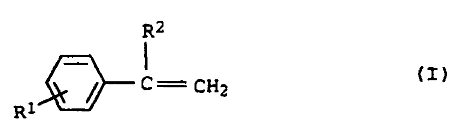 in der R¹ und R² für Wasserstoff oder C₁-C₈-Alkyl stehen und/oder eines (C₁-C₈-Alkyl)esters der Acrylsäure oder Methacrylsäure
a2) 5 bis 40, vorzugsweise 5 bis 38 Gew.-% Acrylnitril und/oder Methacrylnitril, und
a3) 0 bis 40, vorzugsweise 0 bis 30 Gew.-% weiteren monoethylenisch ungesättigten, von a2) verschiedenen Monomeren.

Als Styrolverbindung der allgemeinen Formel (I) (Komponente a1)) setzt man vorzugsweise Styrol, α-Methylstyrol sowie außerdem mit C₁-C₈-Alkyl kemalkylierte Styrole wie p-Methylstyrol odertert.-Butylstyrol, ein. Styrol ist besonders bevorzugt.

Anstelle der Styrolverbindungen oder in Mischung mit ihnen kommen C₁- bis C₈-Alkylester der Acrylsäure und/oder Methacrylsäure in Betracht, besonders solche, die sich vom Methanol, Ethanol, n- und iso-Propanol, sek.-, tert.- und iso-Butanol, Pentanol, Hexanol, Heptanol, Octanol und 2-Ethylhexanol und vor allem vom n-Butanol ableiten. Besonders bevorzugt ist Methylmethacrylat.

Weiterhin kann die Komponente A) auf Kosten der Monomeren a1) und a2) ein oder mehrere weitere, monoethylenisch ungesättigte Monomere a3) enthalten, welche die mechanischen und thermischen Eigenschaften von A) in einem gewissen Bereich variieren. Als Beispiele für solche Comonomere seien genannt:

N-substituierte Maleinimide wie N-Methyl-, N-Phenyl- und N-Cyclohexylmaleinimid;

Acrylsäure, Methacrylsäure, weiterhin Dicarbonsäuren wie Maleinsäure, Fumarsäure und Itaconsäure sowie deren Anhydride wie Maleinsäureanhydrid;

Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid;
aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;
ungesättigte Ether wie Vinylmethylether,
sowie Mischungen dieser Monomeren.

Bevorzugte Komponenten A) sind beispielsweise:
- A/3:: Polymerisate, erhältlich durch Copolymerisation von 40 bis 90, bevorzugt 50 bis 80 Gew.-% Styrol und/oder α-Methylstyrol a1), mit 10 bis 60, bevorzugt 20 bis 40 Gew.-% Acrylnitril a2), sowie gegebenenfalls 0 bis 30, bevorzugt 0 bis 20 Gew.-% von weiteren monoethylenisch ungesättigten, von a2) verschiedenen Monomeren a3).

Enthält die Komponente A) bevorzugt Styrol und Acrylnitril, so entstehen die bekannten handelsüblichen SAN-Copolymeren. Sie haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse von etwa 40000 bis 200000.

Die Komponente A) kann man in an sich bekannter Weise, z.B. durch Substanz-, Lösung- Suspensions-, Fällungs- oder Emulsionspolymerisation erhalten. Einzelheiten dieser Verfahren sind z.B. im Kunststoffhandbuch, Hrg. Vieweg und Daumiller, Carl-Hanser-Verlag München, Bd. 1 (1973), S. 37 bis 42 und Bd. 5 (1969), S. 118 bis 130, sowie in Ullmanns Encyklopädie der technischen Chemie, 4. Aufl., Verlag Chemie Weinheim, Bd. 19, S. 107 bis 158 "Polymerisationstechnik", beschrieben.

Die Komponente B) der Formmassen, aus denen die erfindungsgemäßen Formteile bestehen, ist mit einem Anteil von 0,1 bis 70, bevorzugt 5 bis 60 und besonders bevorzugt 10 bis 55 Gew.-%, bezogen auf die Summe der Komponenten A), B) und C), in den Massen enthalten. Bei dieser Komponente handelt es sich um ein partikelförmiges Pfropfcopolymerisat mit einem mittleren Teilchendurchmesser d₅₀ kleiner 700 nm, das aus einem kautschukelastischen Pfropfkern b1) aus einem Polymeren mit einer Glasübergangstemperatur unter 0°C ("Weichkomponente") und einer darauf aufgepfropften Schale b2) ("Hartkomponente") aufgebaut ist.

Der Pfropfkern b1) ist mit einem Anteil von 30 bis 90, bevorzugt 35 bis 80 und besonders bevorzugt 40 bis 70 Gew.-%, bezogen auf die Komponente B), enthalten.

Man erhält den Pfropfkern b1) durch Polymerisation eines Monomerengemisches aus, bezogen auf b1)
b11) 50 bis 99,99, bevorzugt 80 bis 99,7 und besonders bevorzugt 85 bis 99 Gew.-% eines (C₁-C₁₀-Alkyl)esters der Acrylsäure,
b12) 0,01 bis 20, bevorzugt 0,3 bis 10 und besonders bevorzugt 1 bis 5 Gew.-% eines polyfunktionellen vernetzenden Monomeren, und
b13) 0 bis 20, bevorzugt 0 bis 5 Gew.-% von weiteren monoethylenisch ungesättigten, von b11) verschiedenen Monomeren.

Als Acrylsäurealkylester b11) eignen sich vor allem solche, die sich vom Ethanol, vom 2-Ethylhexanol und besonders vom n-Butanol ableiten.

Vernetzende Monomere b12) sind bi- oder polyfunktionelle Comonomere, beispielsweise Butadien und isopren, Divinylestervon Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols der nachstehenden Formel 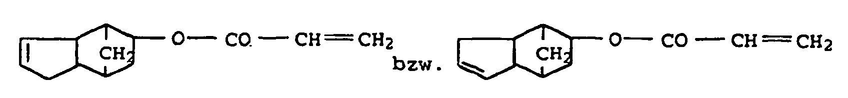 der unter dem Namen Dihydrodicyclopentadienylacrylat bekannt ist, sowie die Allylester der Acrylsäure und der Methacrylsäure.

Bei den weiteren monoethylenisch ungesättigten Monomeren b13), die auf Kosten der Monomeren b11) und b12) im Pfropfkern b1) enthalten sein können, handelt es sich beispielsweise um:
vinylaromatische Monomere wie Styrol, Styrolderivate der allgemeinen Formel 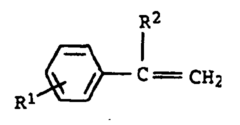
in der R¹ und R² für Wasserstoff oder C₁- bis C₈-Alkyl stehen;
Acrylnitril, Methacrylnitril;
C₁- bis C₄-Alkylester der Acrylsäure wie Methylacrylat, Ethylacrylat, n-Propylacrylat, i-Propylacrylat, n-Butylacrylat, Isobutylacrylat, sek-Butylacrylat, tert-Butylacrylat, Ethylhexylacrylat sowie die entsprechenden Ester der Methacrylsäure; weiterhin auch die Glycidylester, Glycidylacrylat und -methacrylat;
weiterhin die für die Komponente a3) genannten Monomere;
sowie Mischungen dieser Monomeren.

Bevorzugte Monomeren b13) sind Styrol, Acrylnitril, Methylmethacrylat, Glycidylacrylat und -methacrylat, Acrylamid und Methacrylamid.

Die Bestimmung der Glasübergangstemperatur des Pfropfkerns b1) erfolgt nach der DSC-Methode, wie sie in der Publikation H. Illers, Makromol. Chemie 127 (1969), S. 1 ff., beschrieben ist.

Die Pfropfschale b2) wird erhalten durch Polymerisation eines Monomerengemisches aus, bezogen auf B2),
b21) 50 bis 100, bevorzugt 60 bis 95 und besonders bevorzugt 60 bis 90 Gew.-% Monomeren wie für a1) beschrieben,
b22) bis 40, bevorzugt 0 bis 30 Gew.-% Acrylnitril und/oder Methacrylnitril, und
b23) 0 bis 40, vorzugsweise 0 bis 20 Gew.-% Monomeren wie für b13) beschrieben.

Demnach kann die Pfropfschale b2) auf Kosten der Monomere b21) weitere Monomere b22) und/oder b23) enthalten. Bevorzugt ist die Pfropfschale b2), aufgebaut aus Polymerisaten, wie sie als bevorzugte Ausführungsformen A/1, A/2 und A/3 der Komponente A) genannt wurden.

Die Pfropfpolymerisate B) sind in an sich bekannter Weise erhältlich, vorzugsweise durch Emulsionspolymerisation bei 30 bis 80°C. Hierfür eignen sich als Emulgatoren beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise nimmt man die Alkalimetallsalze von Alkylsulfonaten oder Fettsäuren mit 10 bis 18 Kohlenstoffatomen.

Vorzugsweise verwendet man zur Herstellung der Dispersion soviel Wasser, daß die fertige Dispersion einen Feststoffgehalt von 20 bis 50 Gew.-% hat.

Als Polymerisationsinitiatoren kommen vorzugsweise Radikalbildner, beispielsweise Peroxide wie bevorzugt Peroxosulfate und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden. Ferner kann man Molekulargewichtsregler wie z.B. Ethylhexylthioglycolat, t-Dodecylmercaptan, Terpinole und dimeres α-Methylstyrol mitverwenden.

Zur Einhaltung eines konstant bleibenden pH-Wertes, der vorzugsweise bei 6 bis 9 liegt, kann man Puffersubstanzen wie Na₂HPO₄/NaH₂PO₄ oder Natriumhydrogencarbonat mitverwenden.

Emulgatoren, Initiatoren, Regler und Puffersubstanzen werden in den üblichen Mengen eingesetzt, so daß sich nähere Angaben hierzu erübrigen.

Man kann den Pfropfkern besonders bevorzugt auch durch Polymerisation der Monomeren b1) in Gegenwart eines feinteiligen Kautschuklatex herstellen (sog. ''Saattatex-Fahrweise" der Polymerisation).

Prinzipiell ist es auch möglich, die Pfropfgrundlage nach einem anderen Verfahren als dem der Emulsionspolymerisation herzustellen, z.B. durch Masse-, Suspensions- oder Lösungspolymerisation, und die erhaltenen Polymerisate nachträglich zu emulgieren. Auch die Mikrosuspensionspolymerisation ist geeignet, wobei bevorzugt öllösliche Initiatoren wie Lauroylperoxid und t-Butylperpivalat verwendet werden. Die Verfahren hierfür sind bekannt.

Vorzugsweise stimmt man die Reaktionsbedingungen in an sich bekannter Weise so aufeinander ab, daß die Polymerisat-Teilchen einen möglichst einheitlichen Durchmesser d₅₀ im Bereich von 60 bis 700, besonders von 80 bis 650 nm haben.

Anstelle eines einheitlichen Pfropfpolymerisates B) kann man zur Herstellung der erfindungsgemäßen Formteile auch verschiedene dieser Polymerisate verwenden, vor allem solche mit deutlich unterschiedlicher Teilchengröße. Derartige Mischungen mit bimodaler Größenverteilung bieten verfahrenstechnische Vorteile bei der Weiterverarbeitung. Geeignete Teilchendurchmesser liegen im Bereich von 60 bis 200 nm einerseits und 300 bis 700 nm andererseits.

Weiterhin eignen sich auch Pfropfpolymerisate mit mehreren "weichen" und "harten" Stufen, z.B. des Aufbaus b1)-b2)-b1)-b2) oder b2)-b1)-b2), vor allem im Falle größerer Teilchen.

Bevorzugt lassen sich größere Pfropfteilchen B) auch in einem zweistufigen Verfahren herstellen, wie es beispielsweise in der DE-A 24 27 960, Beispiel 3 auf Sp. 9 bis 10, beschrieben ist. Dabei wird zunächst in gewohnter Weise durch Emulsionspolymerisation ein kleinteiliges Pfropfpolymerisat hergestellt, wonach das erhaltene Polymerisat durch Zugabe eines Agglomerationsmittels zu Teilchen größeren Durchmessers agglomeriert wird.

Soweit bei der Pfropfung nicht gepfropfte Polymere aus den Monomeren b2) entstehen, werden diese Mengen, die in der Regel unter 10 Gew.-% von b2) liegen, der Masse der Komponente B) zugeordnet.

Die Komponente B) ist kautschukelastisch und dient der Schlagzähmodifizierung des harten Matrixpolymeren A). Besteht beispielsweise die Matrix A) aus einem Polymeren auf Basis Styrol/ Acrylnitril, sog. SAN-Polymer (bevorzugte Komponente A/3) und das Pfropfpolymerisat B) aus einem Alkylacrylat-Pfropfkern b1) sowie einer Pfropfhülle b2) auf Basis Styrol/Acrylnitril, so erhält man die dem Fachmann als ASA (Acrylnitril/Styrol/Acrylester) bekannten Formmassen.

Polymere einer für die Komponente B) beschriebenen Zusammensetzung können darüber hinaus neben der schlagzähmodifizierenden Wirkung auch eine mattierende Wirkung haben. Dies ist dann der Fall, wenn der mittlere Durchmesser d₅₀ der Pfropfteilchen größer etwa 700 nm ist, also so groß, daß die Formteiloberfläche durch heraustretende Partikel eine mikroskopische Rauhigkeit erhält und damit dem Betrachter matt erscheint, wie eingangs beschrieben wurde. Eine solche Komponente großen mittleren Durchmessers (> 700 nm), die mit Ausnahme des Durchmessers unter die Definition des kleinteiligen Pfropfpolymerisates B) (d₅₀ < 700 nm) fällt, wird der Komponente C) zugerechnet und ist dort als Ausführungsform c3) beschrieben.

Die Komponente C) ist in den Formmassen, aus denen die erfindungsgemäßen Formteile bestehen, mit einem Anteil von 0,1 bis 70, bevorzugt 0,5 bis 50 und besonders bevorzugt 1 bis 40 Gew.-%, bezogen auf die Summe der Komponenten A), B) und C), enthalten. Bei der Komponente C) handelt es sich um ein partikelförmiges Polymerisat, das zur Mattierung von A) und B) enthaltenden Formmassen geeignet ist.

Als Komponente C) sind die folgenden Polymere c1) bis c3) geeignet.

In einer Ausführungsform c1) kommen Pfropfpolymerisate mit einem mittleren Teilchendurchmesser d₅₀ von 700 nm oder darüber in Betracht, die im wesentlichen einen Pfropfkern auf Basis von Butadien und eine Pfropfschale auf Basis von Styrol und Acrylnitril enthalten, sog. Acrylnitril/Butadien/Styrol (ABS)-Polymerisate, und nach dem Verfahren der Lösungspolymerisation hergestellt werden. Sie sind dem Fachmann als sog. Lösungs-ABS (LABS) bekannt. Aus Lösungs-ABS bestehende Pfropfpolymerisate haben in der Regel einen mittleren Teilchendurchmesser d₅₀ von 700 bis 20000, bevorzugt 1000 bis 15000 µm, sind also deutlich größer als ABS-Pfropfteilchen, die nach dem ansonsten üblicherweise verwendeten Emulsionspolymerisationsverfahren oder nach anderen Polymerisationsverfahren hergestellt werden.

Bei dem Verfahren der Lösungspolymerisation sind, im Unterschied zur Suspensions- oder Emulsionspolymerisation, sowohl die Monomeren als auch die daraus entstehenden Polymeren im gewählten Lösungsmittel gelöst.

Die Herstellung des Lösungs-ABS erfolgt in der Regel analog der Herstellung von kautschukmodifiziertem, schlagzähen Polystyrol. Im allgemeinen wird ein Polybutadien-Kautschuk in einem Gemisch aus monomerem Styrol und monomerem Acrylnitril gelöst und anschließend die erhaltene Lösung von Polybutadien in Styrol/Acrylnitril polymerisiert.

Die Polymerisation wird üblicherweise in zwei Stufen vorgenommen, wobei die sog. Vorpolymerisation in einem ersten Reaktor und die nachfolgende Hauptpolymerisation in einem nachfolgenden Reaktor durchgeführt wird.

Als Polymerisationsinhibitoren werden die üblichen, bereits bei B) genannten Radikalbildner verwendet, jedoch können auch die ebendort erwähnten Redox-Systeme eingesetzt werden. Außerdem können beispielsweise bei B) genannte Molekulargewichtsregler mitverwendet werden.

Die Herstellung erfolgt in der Regel entweder im kontinuierlichen Lösungsverfahren (beide Stufen in Lösung) oder diskontinuierlich im sog. Masse-/Suspensionsverfahren (erste Stufe in Masse, zweite Stufe in Suspension).

Einzelheiten sind beispielsweise der US-PS 4 362 850 und Ullmanns Encyclopedia of Technical Chemistry, Vol. A21, S. 644-647, zu entnehmen.

Als weitere bevorzugte Ausführungsform c2) sind Polymere zu nennen, die mit Mischungen, welche A) und B) enthalten, unverträglich sind.

Unter Unverträglichkeit wird die Nichtmischbarkeit auf molekularer Ebene verstanden. Ein Polymeres gilt mit einem anderen als unverträglich, wenn im festen Zustand die Moleküle beider Polymeren nicht statistisch verteilt sind, sondern sich im festen Zustand zwei Phasen ausbilden, die durch eine scharfe Phasengrenze voneinander getrennt sind. Entlang eines die Phasengrenzfläche schneidenden Vektors nimmt die Konzentration des einen Polymeren schlagartig von null auf 100 % zu und die des anderen von 100 % auf null-ab.

Beispiele für Polymere, die mit A) und B) unverträglich sind, sind Kautschuke auf Basis Butadien, insbesondere Acrylnitril-Butadien-Kautschuke, sog. Nitrilkautschuk.

Es kommen beispielsweise handelsübliche Nitrilkautschuke in Betracht, die 5 bis 35 Gew.-%, insbesondere 15 bis 30 Gew.-% Acrylnitril (Rest Butadien) aufweisen. Diese Copolymerisate können in Emulsion oder Masse hergestellt werden. Als Plastizitätsmaß dient zumeist die Mooney-Viskosität nach ASTM D 1646-81. Erfindungsgemäß geeignete Nitrilkautschuke können eine Mooney-Viskosität, gemessen bei 100°C, von 15 bis 130, insbesondere von 30 bis 100, aufweisen. Die Herstellung derartiger Kautschuke in Emulsion ist in der US-PS 3 449 470 beschrieben. Eine Darstellung ist auch in der DE-PS 33 22 784 enthalten.

Weitere Beispiele für mit den Komponenten A) und B) unverträgliche Polymere sind Copolymere aus Butadien und Acrylnitril, in denen die Doppelbindungen der Butadieneinheiten nach der Polymerisation hydriert wurden. Solche Polymere sind beispielsweise in der US-PS 4 857 591 und in der DE-OS 33 29 974 beschrieben.

Weitere Beispiele für mit den Komponenten A) und B) unverträgliche Polymere sind Copolymerisate aus
1) C₂-C₂₀-Alkylestern der Acrylsäure oder Methacrylsäure,
2) Acrylnitril und/oder Methacrylnitril,
3) Styrol sowie dessen substituierte Derivaten, und
4) weiteren Acryl- und Methacrylverbindungen wie Acrylsäure; Methacrylsäure; Maleinsäureanhydrid und dessen Derivate, z.B. Maleinsäureester; Maleinimide wie Alkyl- und Acrylmaleinimide.

Diese Polymere haben in der Regel keinen Schalenaufbau und einen geringen Gelgehalt von üblicherweise unter 50 Gew.-%. Ihre Herstellung ist dem Fachmann bekannt und in der Literatur beschrieben, weshalb nähere Angaben entbehrlich sind.

Als besonders bevorzugte Copolymere der letztgenannten Art sind solche aus n-Butylacrylat, Acrylnitril und Styrol sowie gegebenenfalls Acrylsäure und/oder Methacrylsäure zu nennen.

Näheres zum Begriff der Verträglichkeit von Polymeren und insbesondere dem sog. Löslichkeitsparameter als quantitativem Maß ist z.B. dem Polymer Handbook, Hrg. J. Brandrup und E.H. Immergut, 3. Aufl., Wiley, New York 1989, S. VII/519 bis VII/550 zu entnehmen.

Die Herstellung der zu c2) genannten Polymeren ist dem Fachmann bekannt.

Aus der Unverträglichkeit der Polymerisate c2) mit den aus A) und B) bestehenden Formmassen resultiert, daß die Polymerisate c2) in der Formmasse Agglomerate größeren Durchmessers bilden, die insbesondere in der beschriebenen Weise als Mattierungsmittel wirken.

Als bevorzugte Ausführungsform c3) sind die Alkylacrylat-Pfropfpolymerisate großen Durchmessers (d₅₀ > 700 nm) zu nennen, wie sie bei der Beschreibung der Komponente B) bereits als Mattierungsmittel genannt wurden. Art und Menge der Monomeren, die zur Herstellung der kleinteiligen Komponente B) (d₅₀ < 700 nm) einerseits und der Polymeren c3) andererseits verwendet werden, können gleich oder verschieden sein. In einer bevorzugten Ausführungsform haben die Pfropfpolymerisate c3) einen mittleren Teilchendurchmesser d₅₀ von 3 µm oder darüber, in einer besonders bevorzugten Ausführungsform ist d₅₀ 4 µm oder darüber.

Die Herstellung der gepfropften Acrlylatkautschuk-Partikel c3) erfolgt in der Regel in Emulsion, in Suspension oder in Lösung in der dem Fachmann bekannten Weise.

Das partikelförmige Polymerisat C) kann aus einer der genannten Ausführungsformen c1) bis c3) allein oder aus einer Mischung mehrerer dieser Ausführungsformen bestehen.

Besonders bevorzugt sind solche Polymerisate C), die gute Beständigkeit gegen Witterungseinflüsse aufweisen und die in Kombination mit den ebenfalls UV-Licht-beständigen Komponenten A) und B) Formmassen ergeben, aus denen sich erfindungsgemäße Formteile mit guter Witterungsbeständigkeit herstellen lassen. Insbesondere sind daher Polymerisate C) bevorzugt, die frei sind von Butadien oder anderen konjugierten Dienen.

Gleichfalls besonders bevorzugt sind Polymerisate C), die kautschukelastische Eigenschaften haben. Auf diese Weise werden die guten mechanischen Eigenschaften der Formteile, insbesondere die Zähigkeit, nicht wesentlich verändert oder sogar verbessert.

Insbesondere kann das Pfropfpolymerisat B) teilweise durch die Ausführungsformen c3) - Pfropfpolymerisat gemäß der Definition von B), jedoch mit einem d₅₀-Wert größer 700 nm - ersetzt sein.

Außer den Komponenten A), B) und C) können die thermoplastischen Formmassen, aus denen die erfindungsgemäßen Formteile hergestellt sind, noch Zusatzstoffe wie Gleit- und Entformungsmittel, Wachse, Pigmente, Farbstoffe, Flammschutzmittel, Antioxidantien, Stabilisatoren gegen Lichteinwirkung, faser- und pulverförmige Füll- und Verstärkungsmittel und Antistatika in den für diese Mittel üblichen Mengen enthalten.

Die Herstellung der Formmassen kann nach an sich bekannten Mischverfahren erfolgen, beispielsweise durch Einarbeiten des Pfropfpolymerisates B) und des partikelförmigen Polymerisates C) in das thermoplastische Polymerisat A) bei Temperaturen oberhalb des Schmelzpunktes von A), insbesondere bei Temperaturen von 150 bis 350°C, in einem Extruder, Banbury-Mischer, Kneter, Walzenstuhl oder Kalander. Die Komponenten können jedoch auch ohne Schmelzen "kalt" vermischt werden und das pulvrige oder aus Granulaten bestehende Gemisch wird erst bei. der Verarbeitung aufgeschmolzen und homogenisiert.

Die Formmassen werden nach den allgemein üblichen Verfahren zu den Formteilen verarbeitet.

Die aus den beschriebenen Formmassen hergestellten matten Formteile werden im Außenbereich von Kraftfahrzeugen als Außenspiegel, Leuchteneinfassungen, Kühlergrills, Radkappen, Stoßfänger, Heckblenden, Schutzleisten, Spoiler und Türgriffe eingesetzt.

Die Formteile weisen eine gleichmäßig matte Oberfläche, eine gute Witterungsbeständigkeit und eine gute Schlagzähigkeit auf.

### Beispiele

Bei der Angabe der mittleren Teilchengröße d handelt es sich um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben.

Der d₁₀-Wert gibt denjenigen Teilchendurchmesser an, bei dem 10 Gew.-% aller Teilchen einen kleineren und 90 Gew.-% einen größeren Durchmesser haben. Umgekehrt gilt für den d₉₀-Wert, daß 90 Gew.-% aller Teilchen einen kleineren und 10 Gew.-% einen größeren Durchmesser haben als derjenige Durchmesser, der dem d₉₀-Wert entspricht. Der gewichtsmittlere Teilchendurchmesser d₅₀ bzw. volumenmitttere Teilchendurchmesser D₅₀ gibt denjenigen Teilchendurchmesser an, bei dem 50 Gew.-% bzw. Vol.-% aller Teilchen einen größeren und 50 Gew.-% bzw. Vol.-% einen kleineren Teilchendurchmesser aufweisen. d₁₀-, d₅₀- und d₉₀-Wert charakterisieren die Breite Q der Teilchengrößenverteilung, wobei Q = (d₉₀-d₁₀)/d₅₀. Je kleiner Q ist, desto enger ist die Verteilung.

Es wurden folgende Bestandteile hergestellt (alle %-Angaben sind Gew.-%).

### Herstellung einer Komponente A:

### Copolymerisat aus Styrol und Acrylnitril

Es wurde ein Copolymerisat aus 65 Gew.-% Styrol und 35 Gew.-% Acrylnitril nach dem Verfahren der kontinuierlichen Lösungspolymerisation hergestellt, wie es im Kunststoff-Handbuch, Hrg. R. Vieweg und G. Daumiller, Bd. V "Polystyrol", Carl-Hanser-Verlag München 1969, Seite 122 bis 124, beschrieben ist. Die Viskositätszahl VZ (ermittelt nach DIN 53 726 bei 25°C, 0,5 Gew.-% in Dimethylformamid) betrug 80 ml/g.

### Herstellung einer Komponente B:

### Partikelförmiges Pfropfpolymerisat aus vernetztem Poly-n-Butylacrylat (Kern) / Styrol-Acrylnitril-(Copolymer (Schale)

Zur Herstellung eines Saatlatex wurden 16 g Butylacrylat und 0,4 g Tricyclodecenylacrylat in 150 g Wasser unter Zusatz von 1 g des Natriumsalzes einer C₁₂-C₁₈-Paraffinsulfonsäure, 0,3 g Kaliumpersulfat, 0,3 g Natriumhydrogencarbonat und 0,15 g Natriumphosphat unter Rühren auf 60°C erwärmt. 10 Minuten nach dem Anspringen der Polymerisationsreaktion wurden innerhalb von 3 Stunden eine Mischung auf 82 g Butylacrylat und 1,6 g Tricyclodecenylacrylat zugegeben. Nach Beendigung der Monomerzugabe ließ man noch eine Stunde nachreagieren. Der erhaltene Latex hatte einen Feststoffgehalt von 40 % und eine mittlere Teilchengröße d₅₀ von 76 nm ermittelt. Die Teilchengrößenverteilung war eng (Quotient Q = 0,29).

Zu einer Mischung aus 3 g des erhaltenen Saatlatex, 100 g Wasser und 0,2 g Kaliumpersulfat wurden im Verlauf von 4 Stunden bei 60°C eine Mischung aus 98 g n-Butylacrylat und 2 g Dihydrodicyclopentadienylacrylat sowie getrennt davon eine Lösung von 1 g Na-C₁₂-C₁₈-Paraffinsulfonat in 50 g Wasser gegeben. Die Polymerisation wurde danach noch für 2 Stunden fortgesetzt. Der mittlere Teilchendurchmesser d₅₀ des entstandenen Latex betrug 430 nm bei enger Verteilung der Teilchengröße (Q = 0,1).

150 g dieses Latex wurden mit 60 g Wasser, 0,03 g Kaliumpersulfat und 0,05 g Lauroylperoxid vermischt, wonach auf die Latexteilchen im Laufe von 3 Stunden bei 65°C zunächst 20 g Styrol und danach im Laufe von weiteren 4 Stunden ein Gemisch aus 15 g Styrol und 5 g Acrylnitril aufgepfropft wurden. Anschließend wurde das Polymerisat mit einer Calciumchloridlösung bei 95°C ausgefällt, abgetrennt, mit Wasser gewaschen und im warmen Luftstrom getrocknet. Der Pfropfgrad des Polymerisates betrug 35 % und die Teilchen hatten einen mittleren Durchmesser d₅₀ von 510 nm.

Bei der Komponente B) handelt es sich demnach um ein herkömmliches ASA-Polymeres.

### Herstellung einer Komponente C):

C-I: Partikelförmiges Pfropfpolymerisat aus Polybutadien (Kern) / Styrol-Acrylnitril-Copolymer (Schale), hergestellt in Lösung - sog. Lösungs-ABS
Polybutadien-Kautschuk wurde in einem Gemisch aus monomerem Styrol und monomerem Acrylnitril gelöst und das Gemisch polymerisiert. Im Einzelnen wurde gemäß Example 14 der US-Patentschrift 4 362 850 (Spalten 11 und 12) verfahren.
Der volumenmittlere Durchmesser D₅₀ der erhaltenen Lösungs-ABS-Partikel betrug 4,3 µm, wie durch Ausmessen von elektronenmikroskopischen Aufnahmen, die von dünnen Schnitten angefertigt wurden, festgestellt wurde.
C-II: Kautschuk aus Butadien-Acrylnitril-Polymerisat
Es wurde ein Copolymerisat aus Butadien und Acrylnitril mit einem Acrylnitril-Gehalt von 29 % verwendet. Die Mooney-Viskosität (ermittelt bei 100°C nach ASTM D 1646-81) dieses Kautschuks betrug 50.
C-III: Copolymeres aus n-Butylacrylat, Acrylnitril, Styrol und Acrylsäure Ein Monomerengemisch aus 2 Gew.-% Acrylsäure, 14 Gew.-% Styrol, 54 Gew.-% n-Butylacrylat und 30 Gew.-% Acrylnitril wurde in wäßriger Lösung nach dem Verfahren der Dispersionspolymerisation polymerisiert. Der Feststoffgehalt der Dispersion, die als solche weiterverarbeitet wurde, betrug 48 Gew.-%. Das Polymere ist homogen (kein Schalenaufbau).
C-IV: Partikelförmiges Pfropfpolymerisat aus Poly-n-butylacrylat (Kern) und Styrol/Acrylnitril-Copolymer (Schale) Es wurden

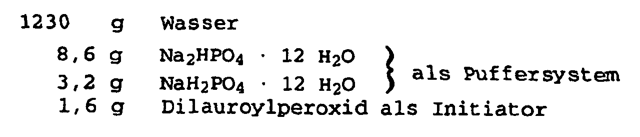

| | |
|---|---|
| 100 g | Polyvinylalkohol-Lösung (10 Gew.-% in Wasser, Hydrolysegrad 88 %, mittlere Molmasse ca. 127 000) als Schutzkolloid |
| 600 g | n-Butylacrylat als Kernmonomeres und |
| 9,0 g | Dihydrodicyclopentadienylacrylat als Vernetzer |

in der angegebenen Reihenfolge unter Stickstoff zusammengegeben und mit einem Hochleistungsrührer (Dissolver-Rührer, 3500 Upm, 5 cm-Zahnscheibe) 40 min lang gerührt.Gleichzeitig wurde das Gemisch allmählich auf 73°C erhitzt. Hierbei bildeten sich Monomerentröpfchen des mittleren Durchmessers von 10 µm, wie an einer Probe mikroskopisch ermittelt wurde.
Diese Dispersion wurde in einen anderen Kessel überführt und dort unter mäßigem Rühren 2 Stunden auf 87°C erhitzt, wobei sich das Kernpolymere (Umsatz etwa 95%) bildete.
Anschließend wurde die Mischung unter mäßigem Rühren bei 70°C im Laufe von 10 Minuten mit einer Mischung aus

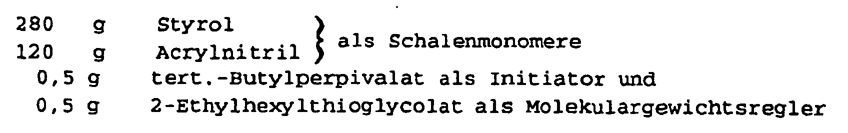

versetzt, dann 2 Stunden bei 70°C gehalten und anschließend innerhalb von 2 Stunden auf 85°C erhitzt.
Die Teilchen des so erhaltenen Pfropfpolymerisates (Typ 60 Gew.-% n-Butylacrylat, 28 Gew.-% Styrol, 12 Gew.-% Acrylnitril, vernetzt) hatten einen mittleren Teilchendurchmesser D₅₀ von 10 µm, einen Durchmesser D₁₀ von 4 µm und einen Durchmesser D₉₀ von 25 µm.
Die erhaltene Dispersion wurde als solche in das Polymere eingearbeitet wie nachfolgend beschrieben.

Die Polymere C-I bis C-IV lassen sich den Ausführungsformen c1) bis c3) der Komponente C) wie folgt zuordnen:
C-I → c1)
C-II → c2)
C-III → c2)
C-IV → c3)

Herstellung der Abmischungen und der Formkörper:

Die Komponenten A), B) und C) wurden in einem üblichen Extruder, Typ ZSK 30, Fa. Werner und Pfleiderer, bei 260°C innig vermischt, extrudiert und granuliert.

Im Falle der Komponenten C-III und C-IV wurden im genannten Extruder zunächst die Komponenten A) und B) vermischt und aufgeschmolzen, wonach die Dispersion von C-III bzw. C-IV kontinuierlich in die Schmelze eingetragen wurde. Der Wasseranteil wurde durch Entwässerungsvorrichtungen entlang des Extruders entfernt.

Das Granulat wurde bei 220°C Schmelztemperatur und 60°C Formtemperatur zu Norm-Kleinstäben (siehe DIN 53 453) gespritzt. Weiterhin wurden bei einer Schmelzetemperatur von 250°C und Formtemperatur von 60°C Rundscheiben von 6 cm Durchmesser und 0,2 cm Dicke gespritzt.

### Untersuchung der Formkörper:

Der Schlagzähigkeitsversuch zur Bestimmung der Schlagzähigkeiten wurde an den Norm-Kleinstäben nach DIN 53 453 vorgenommen.

Zur Bestimmung des Oberflächenglanzes wurde an den Rundscheiben die Lichtreflexion analog DIN 67 530 mit einem Photometer im Winkel von 45° gemessen. Als "matt" sind Rundscheiben zu bezeichnen, die unter den genannten Bedingungen eine Lichtreflexion unter 25 % aufweisen.

Zur Ermittlung der Witterungsbeständigkeit wurden Norm-Kleinstäbe 250, 500 und 1000 Stunden in einem UV-Belichtungsgerät Xenotest 1200 CPS gemäß DIN 53 387 belichtet und anschließend der Schlagzähigkeitsversuch nach DIN 53 453 durchgeführt, wobei der Schlag auf die unbelichtete Seite erfolgte.

Als "gut witterungsbeständig" sind solche Norm-Kleinstäbe zu bezeichnen, die unter den genannten Bedingungen erst nach mehr als 250 Stunden Belichtung Werte unter aₙ = 50 kJ/m² aufweisen.

Die Mischungsverhältnisse in den Polymermischungen sowie die Eigenschaften der aus ihnen hergestellten Formkörper sind der nachstehenden Tabelle zu entnehmen.

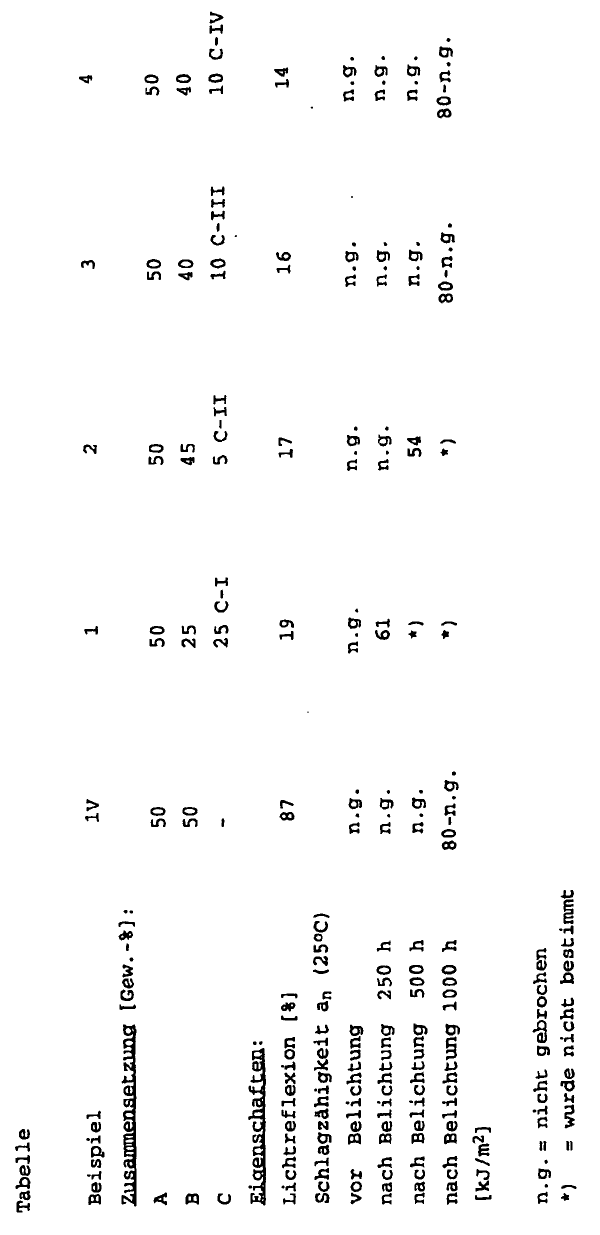

Dem Vergleichsbeispiel 1V ist zu entnehmen, daß Formteile aus Formmassen, die ein SAN-Polymeres A) und ein herkömmliches ASA-Pfropfpolymerisat B) enthalten, zwar eine hohe Schlagzähigkeit aufweisen - die Formkörper brechen nicht - und gut witterungsbeständig sind - kein Abfallen der Schlagzähigkeit nach UV-Belichtung - jedoch einen hohen Oberflächenglanz haben.

Demgegenüber vereinen Formteile, deren Formmassen neben dem SAN-Polymeren A) und dem herkömmlichen ASA-Pfropfpolymerisat B) großteilige Partikel aus Lösungs-ABS (C-I) enthalten, hohe Schlagzähigkeit, gute Witterungsbeständigkeit und einen geringen Oberflächenglanz (gute Mattigkeit), wie Beispiel 1 zeigt.

Bei Mitverwendung eines geringen Anteils eines Butadien-Acrylnitril-Kautschuks C-II neben dem SAN-Polymeren A) und dem herkömmlichen ASA-Pfropfpolymerisat B) (Beispiel 2) zeigen die Formteile eine matte Oberfläche und sind schlagzäh und gut witterungsbeständig.

Wird ein Copolymeres aus Butylacrylat, Acrylnitril, Styrol und Acrylsäure C-III in geringen Mengen mitverwendet, so ist die Witterungsbeständigkeit bei vergleichbar geringem Oberflächenglanz nochmals verbessert werden (Beispiel 3).

Formteile, die geringe Mengen eines großteiligen Acrylat-Kautschuk-Pfropfpolymerisates C-IV enthalten, haben einen nochmals verminderten Oberflächenglanz bei sehr guter Witterungsbeständigkeit (Beispiel 4).

## Patentansprüche

1. Verwendung von Formteilen mit matter Oberfläche für den Außenbereich von Kraftfahrzeugen, **dadurch gekennzeichnet, daß** die Formteile ausgewählt sind aus Außenspiegeln, Leuchteneinfassungen, Kühlergrills, Radkappen, Stoßfängern, Heckblenden, Schutzleisten, Spoilern und Türgriffen, und daß die Formteile hergestellt werden aus thermoplastischen Formmassen, welche enthalten
A) 30 bis 99,8 Gew.-% eines thermoplastischen Polymerisates aus
a1) 50 bis 95 Gew.-% einer Styrolverbindung der allgemeinen Formel 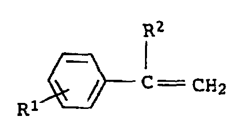 in der R¹ und R² für Wasserstoff oder C₁-C₈-Alkyl stehen, und/oder eines (C₁-C₈-Alkyl)esters der Acrylsäure oder Methacrylsäure,
a2) 5 bis 40 Gew.-% Acrylnitril und/oder Methacrylnftril, und
a3) 0 bis 40 Gew.-% von weiteren monoethylenisch ungesättigten, von a2) verschiedenen Monomeren,
B) 0,1 bis 70 Gew.-% eines Pfropfpolymerisates mit einem mittleren Teilchendurchmesser d₅₀ kleiner 700 nm aus
b1) 30 bis 90 Gew.-% eines kautschukelastischen Pfropfkerns aus einem Polymeren mit einer Glasübergangstemperatur unter 0°C, erhältlich durch Copolymerisation von
b11) 50 bis 99,99 Gew.-% eines (C₁-C₁₀-Alkyl)esters der Acrylsäure,
b12) 0,01 bis 5 Gew.-% eines polyfunktionellen, vernetzenden Monomeren, und
b13) bis 40 Gew.-% von weiteren monoethylenisch ungesättigten, von b11) verschiedenen Monomeren, und
b2) 10 bis 70 Gew.-% einer Pfropfhülle aus
b21) 50 bis 100 Gew.-% einer Styrolverbindung der allgemeinen Formel 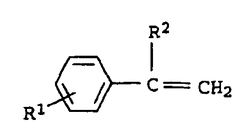 in der R¹ und R² für Wasserstoff oder C₁-C₈-Alkyl stehen, und/oder eines (C₁-C₈-Alkyl)esters der Acrylsäure oder Methacrylsäure,
b22) 0 bis 40 Gew.-% Acrylnitril und/oder Methacrylnitril, und
b23) 0 bis 40 Gew.-% von einem oder mehreren weiteren monoethylenisch ungesättigten Monomeren, und
C) 0,1 bis 70 Gew.-% eines partikelförmigen Polymerisates als Mattierungsmittel, wobei das partikelförmige Polymerisat C) im wesentlichen aus
c1) einem kautschukelastischen Pfropfpolymerisat mit einem mittleren Teilchendurchmesser d₅₀ von 700 nm oder darüber, das im wesentlichen einen Pfropfkern auf Basis von Butadien und eine Pfropfhülle aus Basis von Styrol und Acrylnitril enthält und nach dem Verfahren der Lösungspolymerisation hergestellt wird, oder
c2) einem Polymeren, das mit Mischungen, welche die oben definierten Komponenten A) und B) enthalten, unverträglich ist, oder
c3) einem Pfropfpolymerisat, wie es unter B) definiert wurde, wobei jedoch der mittlere Teilchendurchmesser d₅₀ 700 nm oder mehr beträgt,
aufgebaut ist.

2. Verwendung nach Anspruch 1, **dadurch gekennzeichnet, daß** in denen das partikelförmige Polymerisat C) ein Pfropfpolymerisat aus einem Kern aus Polybutylacrylat und einer Hülle aus einem Styrol-Acrylnitril-Copolymeren ist, wobei der mittlere Teilchendurchmesser d₅₀ 700 nm oder größer ist.

3. Verwendung nach Anspruch 1, **dadurch gekennzeichnet, daß** das partikelförmige Polymerisat C) ein nach dem Verfahren der Lösungspolymerisation hergestelltes Pfropfpolymerisat aus einem Kern aus Polybutadien und einer Hülle aus einem StyrolAcrylnitril-Copolymeren ist, wobei der-mittlere Teilchendurchmesser d₅₀ 700 nm oder größer ist.

4. Verwendung nach Anspruch 1, **dadurch gekennzeichnet, daß** das partikelförmige Polymerisat C) ein hartes Polymerisat auf Basis von Polyalkylmethacrylaten mit einem mittleren Teilchendurchmesser d₅₀ von 800 nm oder darüber, ist.

5. Verwendung nach Anspruch 1, **dadurch gekennzeichnet, daß** das partikelförmige Polymerisat C) ein Polymeres ist, das mit Mischungen, welche die oben definierten Komponenten A) und B) enthalten, unverträglich ist.

6. Verwendung nach Anspruch 1, **dadurch gekennzeichnet, daß** das partikelförmige Polymerisat C) ein Pfropfpolymerisat ist, wie es unter B) definiert wurde, wobei jedoch der mittlere Teilchendurchmesser d₅₀ 700 nm oder mehr beträgt.

## Claims

1. The use of a shaped article having a dull surface for exterior automotive applications, wherein the shaped article is an exterior mirror, a light surround, a radiator grill, a hub cap, a bumper, a rear panel, a protective strip, a spoiler or a door handle, and wherein the shaped article is produced from a thermoplastic molding material which comprises
A) from 30 to 99.8 % by weight of a thermoplastic polymer of
a1) from 50 to 95 % by weight of a styrene compound of the formula 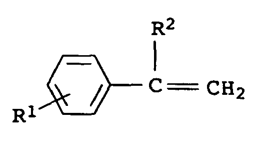 where R¹ and R² are each hydrogen or C₁-C₈-alkyl, and/or of a C₁-C₈-alkyl ester of acrylic acid or methacrylic acid,
a2) from 5 to 40 % by weight of acrylonitrile and/or methacrylonitrile, and
a3) from 0 to 40 % by weight of one or more further monoethylenically unsaturated monomers which differ from a2),
B) from 0.1 to 70 % by weight of a graft polymer having an average particle diameter d₅₀ of less than 700 nm and comprising
b1) from 30 to 90 % by weight of an elastomeric graft core comprising a polymer having a glass transition temperature below 0°C, obtainable by copolymerization of
b11) from 50 to 99.99 % by weight of a C₁-C₁₀-alkyl ester of acrylic acid,
b12) from 0.01 to 5 % by weight of a polyfunctional, crosslinking monomer, and
b13) from 0 to 40 % by weight of one or more further monoethylenically unsaturated monomers which differ from b11), and
b2) from 10 to 70 % by weight of a graft shell comprising
b21) from 50 to 100 % by weight of a styrene compound of the formula 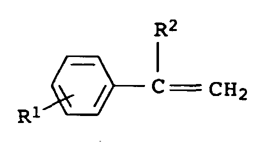 where R¹ and R² are each hydrogen or C₁-C₈-alkyl, and/or of a C₁-C₈-alkyl ester of acrylic acid or methacrylic acid,
b22) from 0 to 40 % by weight of acrylonitrile and/or methacrylonitrile, and
b23) from 0 to 40 % by weight of one or more further monoethylenically unsaturated monomers and
C) from 0.1 to 70 % by weight of a particulate polymer as a dulling agent, the particulate polymer C) being essentially composed of
c1) an elastomeric graft polymer having an average particle diameter d₅₀ of 700 nm or more, which essentially comprises a graft core based on butadiene and a graft shell based on styrene and acrylonitrile and is prepared by the solution polymerization method, or
c2) a polymer which is incompatible with mixtures which comprise the components A) and B) defined above, or
c3) a graft polymer as defined under B), but having an average particle diameter d₅₀ of 700 nm or more.

2. The use according to claim 1, wherein the particulate polymer C) is a graft polymer comprising a core of polybutyl acrylate and a shell of a styrene-acrylonitrile copolymer, the average particle diameter d₅₀ being 700 nm or greater.

3. The use according to claim 1, wherein the particulate polymer C) is a graft polymer prepared by the solution polymerization method and comprising a core of polybutadiene and a shell of a styrene-acrylonitrile copolymer, the average particle diameter d₅₀ being 700 nm or greater.

4. The use according to claim 1, wherein the particulate polymer C) is a hard polymer based on polyalkyl methacrylates having an average particle diameter d₅₀ of 800 nm or more.

5. The use according to claim 1, wherein the particulate polymer C) is a polymer which is incompatible with mixtures which comprise the components A) and B) defined above.

6. The use according to claim 1, wherein the particulate polymer C) is a graft polymer as defined under B), but the average particle diameter d₅₀ is 700 nm or more.

## Revendications

1. Utilisation de pièces moulées à surface mate pour parties extérieures de véhicules, **caractérisée en ce que** les pièces moulées sont choisies dans le groupe des rétroviseurs extérieurs, cerclage de phares, calandres, enjoliveurs, pare-chocs, pare-soleil arrière, bandes de protection et poignées de portières, et **en ce que** les pièces moulées sont préparées à partir de masses de moulage thermoplastiques contenant
A) de 30 à 99,8% en poids d'un polymère thermoplastique à base de
a1) 50 à 95% en poids d'un composé de styrène de la formule générale 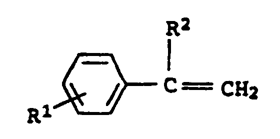 dans laquelle R¹ et R² représentent de l'hydrogène ou un radical alkyle en C₁ à C₈, et/ou un ester alkylique en C₁ à C₈ de l'acide acrylique ou de l'acide méthacrylique,
a2) de 5 à 40% en poids d'acrylonitrile et/ou de méthacrylonitrile, et
a3) de 0 à 40% en poids d'autres monomères monoéthyléniquement insaturés, différents de a2),
B) de 0,1 à 70% en poids d'un polymère greffé présentant un diamètre particulaire moyen d₅₀ inférieur à 700 nm, à base de :
b1) de 30 à 90% en poids d'un noyau de greffage à élasticité de caoutchouc, constitué d'un polymère présentant une température de transition vitreuse inférieure à 0°C, que l'on peut obtenir par copolymérisation de :
b11) 50 à 99,99% en poids d'un ester alkylique en C₁ à C₁₀ de l'acide acrylique,
b12) 0,01 à 5% en poids d'un monomère réticulant polyfonctionnel, et
b13) 0 à 40% en poids d'autres monomères monoéthyléniquement insaturés, différents de b11), et
b2) de 10 à 70% en poids d'une enveloppe de greffage à base de :
b21) 50 à 100% en poids d'un composé styrénique de la formule générale 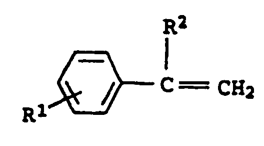 dans laquelle R¹ et R² représentent de l'hydrogène ou un radical alkyle en C₁ à C₈, et/ou un ester alkylique en C₁ à C₈ de l'acide acrylique ou de l'acide méthacrylique,
b22) de 0 à 40% en poids d'acrylonitrile ou de méthacrylonitrile, et
b23) de 0 à 40% en poids d'un ou plusieurs autres monomères monoéthyléniquement insaturés, et
C) de 0,1 à 70% en poids d'un polymère particulaire en qu'agent matifiant, le polymère particulaire C) étant essentiellement constitué de :
c1) un polymère de greffage à élasticité de caoutchouc présentant un diamètre particulaire moyen d₅₀ de 700 nm ou plus, contenant essentiellement un noyau de greffage à base de butadiène et une enveloppe de greffage à base de styrène et d'acrylonitrile et préparé par le procédé de polymérisation en solution, ou
c2) un polymère compatible, non compatible avec des mélanges contenant les composants A) et B) définis ci-dessus, ou
c3) un polymère de greffage, tel que défini en B), mais dont le diamètre particulaire d₅₀ est de 700 nm ou plus.

2. Utilisation selon la revendication 1, **caractérisée en ce que** le polymère particulaire C) est un polymère de greffage à base d'un noyau de poly(acrylate de butyle) et d'une enveloppe constituée d'un copolymère de styrène-acrylonitrile, le diamètre particulaire d₅₀ étant de 700 nm ou plus.

3. Utilisation selon la revendication 1, **caractérisée en ce que** le polymère particulaire C) est un polymère de greffage préparé par le procédé de polymérisation en solution, et constitué d'un noyau de polybutadiène et d'une enveloppe en un copolymère de styrène-acrylonitrile, le diamètre particulaire d₅₀ étant de 700 nm ou plus.

4. Utilisation selon la revendication 1, **caractérisée en ce que** le polymère particulaire C) est un polymère dur à base de poly(méthacrylates d'alkyle) d'un diamètre particulaire moyen d₅₀ de 800 nm ou plus.

5. Utilisation selon la revendication 1, **caractérisée en ce que** le polymère particulaire C) est un polymère compatible, incompatible avec des mélanges contenant les composants A) et B) définis plus haut.

6. Utilisation selon la revendication 1, **caractérisée en ce que** le polymère particulaire C) est un polymère de greffage, tel que défini en B), mais dont le diamètre particulaire d₅₀ est de 700 nm ou plus.
